# EUROPEAN PATENT SPECIFICATION

(11) **EP 4 417 721 B1**
(45) Date of publication and mention of the grant of the patent: **01.04.2026**
(21) Application number: 22889658.5
(22) Date of filing: 12.09.2022
(51) Int. Cl.: C22B 23/00, B09B 3/00, B09B 3/70, C01G 51/00, C01G 53/00, C22B 3/04, C22B 3/32, C22B 3/38, C22B 7/00, H01M 10/54, B09B 3/80, C22B 3/26, C22B 3/44, C22B 3/00, C22B 26/12, B09B 101/16

(54) **METHOD FOR PRODUCING COBALT SOLUTION**
VERFAHREN ZUR HERSTELLUNG EINER KOBALTLÖSUNG
PROCÉDÉ DE PRODUCTION D'UNE SOLUTION DE COBALT

(30) Priority: 08.11.2021 JP 2021182150; 09.05.2022 JP 2022077154
(43) Date of publication of application: 21.08.2024
(73) Proprietor: JX Metals Circular Solutions Co., Ltd., Tokyo 105-8417 (JP)
(72) Inventor: ARIYOSHI, Hirotaka, Hitachi-shi, Ibaraki 317-0056 (JP); ABE, Hiroshi, Hitachi-shi, Ibaraki 317-0056 (JP); MIKI, Yuzuru, Hitachi-shi, Ibaraki 317-0056 (JP)
(74) Representative: Arnold & Siedsma
(86) International application number: PCT/JP2022/034087
(87) International publication number: WO 2023/079834

(56) References cited:
- EP-A1- 3 904 547
- WO-A1-2021/215520
- WO-A1-2021/215521
- JP-A- 2014 162 982
- JP-A- 2020 105 599
- JP-A- 2020 105 599
- JP-A- 2021 172 856
- JP-A- 2021 172 856
- JP-A- H0 770 656
- JP-A1- WO2018 181 816
- JP-B2- 6 346 402
- FLETT D S: "Solvent extraction in hydrometallurgy: the role of organophosphorus extractants", JOURNAL OF ORGANOMETALLIC CHEMISTRY, ELSEVIER, AMSTERDAM, NL, vol. 690, no. 10, 16 May 2005 (2005-05-16), pages 2426 - 2438, XP004877377, ISSN: 0022-328X, DOI: 10.1016/J.JORGANCHEM.2004.11.037

## Description

### FIELD OF THE INVENTION

This specification discloses a method for producing a cobalt solution, a method for producing a cobalt salt, a method for producing a nickel solution, and a method for producing a nickel salt.

### BACKGROUND OF THE INVENTION

In recent years, it has been widely studied for recovery of valuable metals such as cobalt and nickel from lithium ion battery waste discarded for expired product life, manufacturing defects or other reasons by means of a wet process, in terms of effective utilization of resources.

In relation to this, Patent Literature 1 discloses:
"A method for recovering metals from a metal mixed solution, the method comprising: a step (1): a step of subjecting an aqueous metal mixed solution containing a metal group A consisting of lithium, manganese, nickel, and cobalt, and a metal group B consisting of copper, aluminum, and iron to solvent extraction using a first mixed extracting agent containing a phosphonate ester-based extracting agent and a carboxylic acid-based extracting agent, to separate metals belonging to the metal group B from the metal mixed solution; a step (2): a step of subjecting the extraction residue after the step (1) to solvent extraction using a second mixed extracting agent containing a phosphate ester-based extracting agent and an oxime-based extracting agent, to further separate metals belonging to the metal group B from the extraction residue as well as to separate manganese; a step (3): a step of subjecting the extraction residue after the step (2) to solvent extraction using a phosphonate ester-based extracting agent to separate cobalt from the extraction residue; and step (4): a step of subjecting the extraction residue after the step (3) to solvent extraction using a carboxylic acid-based extracting agent to separate nickel from the extraction residue, in this order.".

Also, Patent Literatures 2 and 3 disclose:
"A method for processing lithium ion battery scrap comprising Li, Ni, Co, Mn, Al, Cu and Fe, the method comprising: a leaching step of performing roasting, crushing, and sieving steps in this order, and then adding the lithium ion battery scrap to an acidic solution to leach it, leaving at least part of the Cu as a solid; a Fe and Al removal step of performing a Fe removal process wherein the leached solution obtained in the leaching step separates and removes Fe by adding an oxidizing agent, and a Al removal process wherein a portion of Al is separated and removed by neutralization, in any order; an Al and Mn extraction step of extracting and removing the remainder of Al and Mn from the separated solution obtained in the Fe and Al removal step by solvent extraction; a Co recovery step of extracting Co from a first extracted solution obtained in the Al and Mn extraction step and stripping it by solvent extraction and recovering Co by electrowinning; a Ni recovery step of extracting part of Ni from a second extracted solution obtained by solvent extraction of the Co recovery step and stripping it by solvent extraction and recovering the Ni by electrowinning; a Li concentration step of extracting the remainder of Ni and Li from the a extracted solution obtained by solvent extraction of the Ni recovery step and striping it by solvent extraction, and repeating the extracting and stripping operations to concentrate the Li; and a Li recovery step of carbonating the Li in the Li concentrate obtained in the Li concentration step and recover it as lithium carbonate.". Patent Literatures 2 and 3 disclose that a phosphonate ester-based extracting agent is used for the first extracted solution in the solvent extraction of the Co recovery step and that a carboxylic acid-based extracting agent is used for the second extracted solution in the solvent extraction of the Ni recovery step.

### PRIOR ART

### Patent Literature

[Patent Literature 1] Japanese Patent Application Publication No. 2014-162982 A
[Patent Literature 2] WO 2018/181816 A1
[Patent Literature 3] U.S. Patent Application Publication No. 2020/0044295 A1
[Patent Literature 4] JP2021172856 A
[Patent Literature 5] JP2020105599 A

### SUMMARY OF THE INVENTION

### Technical Problem

By the way, when powder of batteries resulting from lithium ion battery waste (which may hereinafter be referred to as "battery powder") is subjected to a leaching process, magnesium ions may be included in a solution containing cobalt ions due the lithium ion battery waste containing a relatively large amount of magnesium. If magnesium ions are not sufficiently removed, the purity of the cobalt solution or nickel solution to be produced may decrease, so that the purity may not be increased to a level sufficient to be effectively used for the production of lithium ion batteries.

This specification provides a method for producing a cobalt solution that can effectively remove magnesium ions from a cobalt-containing solution containing magnesium ions, and a method for producing a cobalt salt. Also, this specification provides a method for producing a nickel solution that can effectively remove magnesium ions from a nickel-containing solution containing magnesium ions, and a method for producing a nickel salt.

The method for producing a cobalt solution disclosed in this specification is a method for producing a cobalt solution by removing magnesium ions from a cobalt-containing solution obtained by subjecting battery powder resulting from lithium ion battery waste to a leaching process, the cobalt-containing solution comprising the magnesium ions, wherein the method comprises: a magnesium separation step of extracting cobalt ions from the cobalt-containing solution using a solvent comprising a carboxylic acid-based extracting agent to separate the magnesium ions, and then stripping the cobalt ions from the solvent to obtain the cobalt solution as a stripped solution.

Further, the method for producing a cobalt salt disclosed in this specification is a method for producing a cobalt salt using the above method for producing the cobalt solution, wherein the method comprises a crystallization step of crystallizing the cobalt salt by crystallization from the cobalt solution obtained in the above magnesium separation step.

Further, the method for producing a nickel solution disclosed in this specification is a method for producing a nickel solution by removing magnesium ions from a nickel-containing solution obtained by subjecting battery powder resulting from lithium ion battery waste to at least a leaching process, the nickel-containing solution comprising cobalt ions, as well as comprising magnesium ions at a concentration of 0.002 g/L to 1.000 g/L, wherein the method comprises: a cobalt extraction step of extracting part of the cobalt ions and the magnesium ions from the nickel-containing solution using a solvent comprising a phosphonate ester-based extracting agent; and a nickel extraction step of extracting nickel ions from an extracted solution obtained after extraction in the cobalt extraction step, the extracted solution comprising nickel ions, as well as comprising magnesium ions at a concentration of 0.001 g/L to 0.610 g/L, using a solvent comprising a carboxylic acid-based extracting agent at an equilibrium pH of 6.3 to 7.5, and then stripping the nickel ions from the solvent to obtain the nickel solution as a stripped solution.

Further, the method for producing a nickel salt disclosed in this specification is a method for producing a nickel salt using the above method for producing the nickel solution, wherein the method comprises a crystallization step of crystallizing the nickel salt by crystallization from the nickel solution obtained in the nickel extraction step.

According to the method for producing the cobalt solution and the method for producing the cobalt salt as described above, the magnesium ions can be effectively removed from the cobalt-containing solution containing the magnesium ions. Also, according to the method for producing the nickel solution and the method for producing the nickel salt as described above, the magnesium ions can be effectively removed from the nickel-containing solution containing the magnesium ions. The obtained cobalt solution and nickel solution have few impurities and can be used for the production of lithium ion batteries.

### BRIEF DESCRIPTION OF THE DRAWINGS

FIG. 1 is a flowchart showing an example of a process for recovering metals from lithium ion battery waste to which a method for producing a cobalt solution according to an embodiment can be applied;
FIG. 2 is a flowchart showing a method for producing a cobalt salt according to an embodiment;
FIG. 3 is a graph showing a relationship between an extraction rate of each ion and an equilibrium pH during cobalt extraction in Example;
FIG. 4 is a graph showing a removal rate of each ion in a stripped solution with respect to an equilibrium pH during scrubbing of a solvent containing cobalt ions in Example;
FIG. 5 is a graph showing a relationship between an extraction rate of each ion and an equilibrium pH during nickel extraction in Example; and
FIG. 6 is a graph showing a removal rate of each ion in a stripped solution with respect to an equilibrium pH during scrubbing of a solvent containing nickel ions in Example.

### DETAILED DESCRIPTION OF THE INVENTION

Hereinafter, embodiments of the method for producing the cobalt solution, the method for producing the cobalt salt, the method for producing the nickel solution, and the method for producing the nickel salt will be described in detail.

It should be noted that the cobalt solution means an acidic solution containing cobalt ions and anions, and includes, for example, a cobalt sulfate solution, a cobalt hydrochloride solution, and a cobalt nitrate solution. Appropriate anions are selected depending on the cobalt salt to be produced. The cobalt solution preferably has high purity by removing impurities to such an extent that the cobalt solution can be effectively used for the production of lithium ion batteries, and preferably has each concentration of magnesium ions, nickel ions, manganese ions, aluminum ions, iron ions, and copper ions of 0.01 g/L or less. Furthermore, the cobalt solution preferably has a sodium ion concentration of 0.1 g/L or less. Moreover, the cobalt salt means a cobalt compound (solid) in which cobalt ions and anions are ionically bonded, and is obtained by crystallization from a cobalt solution, and examples thereof include cobalt sulfate, cobalt hydrochloride, and cobalt nitrate. Each grade of magnesium, nickel, manganese, aluminum, iron, and copper of the cobalt salt is 10 ppm by mass or less. Furthermore, it is preferable that the grade of sodium is 10 ppm by mass or less.

Also, the nickel solution means an acidic solution containing nickel ions and anions, and includes, for example, a nickel sulfate solution, a nickel hydrochloride solution, and a nickel nitrate solution. Appropriate anions are selected depending on the nickel salt to be produced. The nickel solution preferably has high purity by removing impurities to such an extent that the nickel solution can be effectively used for the production of lithium ion batteries, and preferably has each concentration of magnesium ions, cobalt ions, manganese ions, aluminum ions, iron ions, and copper ions of 0.01 g/L or less. Furthermore, the nickel solution preferably has a sodium ion concentration of 0.1 g/L or less. Moreover, the nickel salt means a nickel compound (solid) in which nickel ions and anions are ionically bonded, and is obtained by crystallization from a nickel solution, and examples thereof include nickel sulfate, nickel hydrochloride, and nickel nitrate. Each grade of magnesium, cobalt, manganese, aluminum, iron, and copper of the nickel salt is 10 ppm by mass or less. Furthermore, it is preferable that the grade of sodium is 10 ppm by mass or less.

The method for producing the cobalt solution according to an embodiment produces a cobalt solution from a cobalt-containing solution obtained by subjecting powder of batteries resulting from lithium ion battery waste to at least leaching process (i.e., a leaching step). The cobalt-containing solution contains cobalt ions, and magnesium ions as impurities. To separate the magnesium ions from the cobalt-containing solution, a magnesium separation step is performed to extract the cobalt ions from the cobalt-containing solution using a solvent containing a carboxylic acid-based extracting agent, and strip the extracted cobalt ions from the solvent.

In the magnesium separation step, the use of the solvent containing the carboxylic acid-based extracting agent allows the cobalt ions to be extracted without substantially extracting the magnesium ions. This can lead to effective removal of the magnesium ions from the cobalt-containing solution. In the magnesium separation step, the stripping of the cobalt ions from the solvent that has extracted the cobalt ions results in a cobalt solution that has sufficiently removed the magnesium ions.

Further, the method for producing a nickel solution according to an embodiment produces a nickel solution from a nickel-containing solution obtained by subjecting powder of batteries resulting from lithium ion battery waste to at least a leaching process (i.e., a leaching step). The nickel-containing solution contains cobalt ions and nickel ions, as well as magnesium ions at a concentration of 0.002 g/L to 1.000 g/L. The nickel-containing solution is subjected to a cobalt extraction step to extract the cobalt ions and a part of the magnesium ions. The extracted solution obtained after extraction in the cobalt extraction step contains nickel ions, as well as magnesium ions at a concentration of 0.001 g/L to 0.610 g/L. The extracted solution is subjected to a predetermined nickel extraction step.

In the nickel extraction step, a solvent containing a carboxylic acid-based extracting agent is used for the above extracted solution, so that the equilibrium pH during extraction is 6.3 to 7.5. This allows nickel and magnesium to be effectively separated by extracting nickel ions into the solvent without extracting magnesium ions. In the nickel extraction step, the stripping of the nickel ions from the solvent that has extracted the nickel ions results in a nickel solution that has sufficiently removed the magnesium ions.

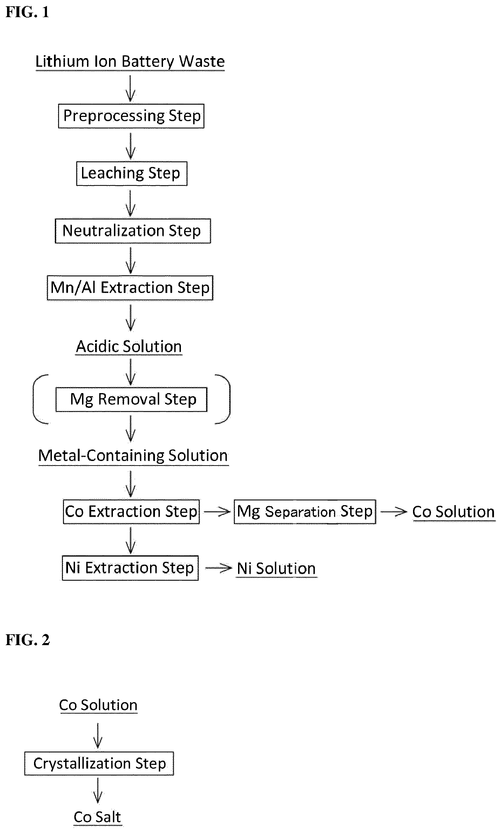

This embodiment can apply various solutions as the above cobalt-containing solution and the nickel-containing solution as long as they are a solution obtained by subjecting powder of batteries resulting from lithium ion battery waste to at least a leaching process (i.e., a leaching step) and containing cobalt ions and magnesium ions, and/or a solution containing cobalt ions, nickel ions, and magnesium ions. Further, after the leaching step, a neutralization step, a solvent extraction step, and the like may be performed as necessary. Here, a case where the present invention is applied to a metal recovery process from lithium ion battery waste as shown in FIG. 1 will be described in detail as an example, but the present invention is not limited to such a specific process.

### (Lithium Ion Battery Waste)

The lithium ion battery waste of interest is lithium ion batteries which can be used in various electronic devices such as mobile phones and which have been discarded due to the expired life of the product, manufacturing defects or other reasons. From the viewpoint of effective utilization of resources, the recovery of valuable metals from such lithium ion battery waste is required. In particular, it is desirable to recover the valuable metals, cobalt and nickel, with high purity so that they can be used again for the production of lithium ion batteries.

The lithium ion battery waste has a housing containing aluminum as an exterior that wraps around the lithium ion battery. Examples of the housing include those made only of aluminum and those containing aluminum, iron, aluminum laminate, and the like. The lithium ion battery waste may also contain, in the above housing, cathode active materials composed of one single metal oxide of at least one selected from the group consisting of lithium, nickel, cobalt and manganese, or a composite metal oxides of two or more of those, or the like, and aluminum foils (cathode current collectors) to which the cathode active materials are applied and fixed by, for example, polyvinylidene fluoride (PVDF) or other organic binders. In addition, the lithium ion battery waste may contain copper, iron, or the like. Further, the housing of the lithium ion battery waste typically contains an electrolyte. As the electrolyte, ethylene carbonate, diethyl carbonate or the like may be used, for example.

Furthermore, the lithium ion battery waste may contain magnesium, for example, in a proportion of 0.02% by mass to 0.10% by mass relative to cobalt and nickel. The magnesium can be used, for example, as an alloy component element of aluminum foils used for the current collectors of the cathodes. Such magnesium is dissolved into an acidic leaching solution in a leaching step as described later and is contained as ions in a leached solution. Although magnesium is removed to some extent during the neutralization step and the manganese/aluminum extraction step, it remains in the acidic solution without being removed to such an extent that it can be effectively used for the production of lithium ion batteries. The magnesium ions are further extracted and stripped together with cobalt ions in a subsequent cobalt extraction step to obtain a cobalt-containing solution containing the magnesium ions. In this embodiment, a magnesium separation step is performed to remove the magnesium ions from the obtained cobalt-containing solution containing the magnesium ions.

### (Preprocessing Step)

The preprocessing step includes roasting. The roasting heats the lithium ion battery waste as described above. More particularly, the lithium ion battery waste can be heated in a temperature range of, for example, 450°C to 1000°C, preferably 600°C to 800°C, for 0.5 to 4 hours. The roasting is performed, for example, for the purpose of changing metals such as lithium and cobalt contained in the lithium ion battery waste to forms that are easily dissolved. The roasting may be performed in an air atmosphere or an inert atmosphere such as nitrogen, or may be performed in both the air atmosphere and the inert atmosphere, either sequentially or in random order. A roasting furnace may be of a batch type or a continuous type. For example, the furnace of the batch type may be a stationary furnace, the furnace of the continuous type may be a rotary kiln, and various other types of furnaces may also be used.

After the roasting, the lithium ion battery wase can be crushed to remove the battery powder containing cathode active materials and the like from the housing of the lithium ion battery waste. The crushing destroys the housing of the lithium ion battery waste and selectively separates the cathode active materials from the current collectors (aluminum foils) to which the cathode active materials are applied. Various known apparatuses or devices can be used in the crushing. In particular, it is preferable to use an impact-type crusher that can crush lithium ion battery waste by applying an impact while cutting it. Examples of the impact-type crusher include a sample mill, a hammer mill, a pin mill, a wing mill, a tornado mill, and a hammer crusher. A screen can be installed at an exit of the crusher, whereby the lithium ion battery waste is discharged from the crusher through the screen when it is crushed to a size that can pass through the screen.

After crushing, the sieving is performed using a sieve having an appropriate sieve opening, for example, for the purpose of removing the current collectors (aluminum foils and/or copper foils), pieces of the housings and the like. Thus, aluminum or copper remains on the sieve, and the battery powder that has removed Al or Cu to some extent is obtained under the sieve. The battery powder can be subjected to a leaching step as described below.

In addition, each of the roasting, the crushing, and the sieving in the preprocessing step may optionally be performed, or may be performed in random order.

### (Leaching Step)

In the leaching step, the battery powder described above is added to an acidic leaching solution such as sulfuric acid and leached. The leaching step can be carried out using known methods or conditions, but the pH is preferably 0.0 to 2.0.

It should be noted that, if necessary, the battery powder may be brought into contact with water in advance before leaching with the acidic leaching solution, and only lithium contained in the battery powder may be leached and separated. In this case, the leaching is performed by adding the residue after contacting the battery powder with water to the above acidic leaching solution.

Through the leaching step, a leached solution in which certain metals are dissolved is obtained after solid-liquid separation. The certain metals include cobalt and magnesium. The certain metals may further include nickel, manganese, aluminum, iron, and the like.

For example, the leached solution may have a cobalt ion concentration of 0 g/L to 50 g/L, a nickel ion concentration of 0 g/L to 50 g/L, a manganese ion concentration of 1 g/L to 50 g/L, a magnesium ion concentration of 0.001 g/L to 0.1 g/L, an aluminum ion concentration of 0.01 g/L to 10 g/L, and an iron ion concentration of 0.1 g/L to 5 g/L. However, if the cathode active material of the lithium ion battery waste to be processed is ternary, the leached solution may have a cobalt ion concentration of 1 g/L to 50 g/L, a nickel ion concentration of 1 g/L to 50 g/L, a manganese ion concentration of 1g/L to 50g/L, a magnesium ion concentration of 0.001g/L to 0.1g/L, an aluminum ion concentration of 0.01g/L to 10g/L, and an iron ion concentration of 0.1 g/L to 5 g/L.

### (Neutralization Step)

The leached solution is subjected to a neutralization step. In the neutralization step, first, an alkali such as sodium hydroxide is added to the leached solution to neutralize it so as to have a predetermined pH. This can allow a part of aluminum dissolved in the leached solution to be precipitated. A residue containing a part of the aluminum can be removed by solid-liquid separation using a filter press, a thickener, or the like.

Here, the pH is more preferably 4.0 to 6.0 by adding the alkali. Further, the leached solution has an oxidation reduction potential (ORP value, silver/silver chloride potential basis) of preferably -500 mV to 100 mV. The solution temperature is preferably 50 °C to 90 °C.

Subsequently, an oxidizing agent is added and a pH is adjusted to the range of 3.0 to 4.0, whereby the iron in the solution can be precipitated. The addition of the oxidizing agent oxidizes the iron in the solution from divalent iron to trivalent iron, and the trivalent iron is precipitated as an oxide or hydroxide at a pH lower than that of the divalent iron. The iron is often precipitated as a solid such as iron hydroxide (Fe(OH)₃). The precipitated iron can be removed by solid-liquid separation.

The ORP value during oxidation is preferably 300 mV to 900 mV in order to precipitate iron. Prior to the addition of the oxidizing agent, an acid such as sulfuric acid, hydrochloric acid and nitric acid can be added to lower the pH.

The oxidizing agent is not particularly limited as long as it can oxidize iron, and it is preferably manganese dioxide, a cathode active material, and/or a manganese-containing leached residue obtained by leaching the cathode active material. The manganese-containing leaching residue obtained by leaching the cathode active material with an acid or the like may contain manganese dioxide. When the above manganese (cathode active material, etc.) is used as the oxidizing agent, it causes a precipitation reaction in which manganese dissolved in the solution is converted to manganese dioxide, so that the precipitated manganese can be removed together with iron.

After adding the oxidizing agent, the pH can be adjusted to a predetermined range by adding an alkali such as sodium hydroxide, sodium carbonate, and ammonia.

If the neutralization step is performed under conditions that remove many magnesium ions, there is concern that iron and aluminum will not be effectively removed and the loss of cobalt, nickel, etc. will become significant. Therefore, the neutralization step is preferably carried out under the conditions as described above. In this case, when the magnesium content in the battery powder is 100% by mass, 10% to 30% by mass of magnesium may be removed in the neutralization step, but the neutralized solution obtained after the neutralization step may leave magnesium.

### (Manganese/Aluminum Extraction Step)

The neutralized solution obtained after the neutralization step is subjected to a manganese/aluminum extraction step of extracting and removing the remainder of manganese and/or aluminum by a solvent extraction method. This provides a metal-containing solution as an extracted solution (i.e., an aqueous phase) that has removed manganese and/or aluminum.

In this case, an extracting agent containing a phosphate ester-based extracting agent is preferably used for the neutralized solution. Here, examples of the phosphate ester-based extracting agent include di-2-ethylhexylphosphoric acid (product name: D2EHPA or DP8R). Further, the extracting agent may be a mixture of the phosphate ester-based extracting agent and an oxime-based extracting agent. In this case, the oxime-based extracting agent preferably contains aldoxime or aldoxime as a main component. Specific examples include 2-hydroxy-5-nonylacetophenone oxime (product name: LIX84), 5-dodecyl salicylaldoxime (product name: LIX860), a mixture of LIX84 and LIX860 (product name: LIX984), 5-nonyl salicylaldoxime (product name: ACORGAM5640) and the like, and among them, 5-nonyl salicylaldoxime is preferable in terms of price and the like.

In the solvent extraction when extracting manganese and/or aluminum, the equilibrium pH during extraction is preferably 2.5 to 4.0, more preferably 2.8 to 3.3. It is desirable that the extraction be carried out in multiple stages. Thus, in addition to manganese and/or aluminum, a larger amount of magnesium can also be removed from the neutralized solution. When performing the extraction in multiple stages, it is also effective that the equilibrium pH during extraction in any of the multiple stages, for example, the equilibrium pH during extraction in the first stage, is set to a value within the above range, and the equilibrium pH during extraction is lowered for every additional stages.

The manganese/aluminum extraction step is preferably carried out under the conditions as described above, in order to effectively extract manganese and aluminum while suppressing the loss of cobalt, nickel, and the like. In this case, the metal-containing solution that is the extracted solution contains certain amounts of magnesium ions. When the magnesium content in the battery powder is 100% by mass, 10% to 60% by mass of magnesium may be removed in the manganese/aluminum extraction step, but the metal-containing solution obtained in the manganese/aluminum extraction step may leave the magnesium ions.

The metal-containing solution (for example, the nickel-containing solution or the like) obtained in the manganese/aluminum extraction step contains at least one or both of the cobalt ions and the nickel ions, as well as the magnesium ions as impurities. The metal-containing solution may have a magnesium ion concentration of, for example, 0.002 g/L or more, typically 0.05 g/L or more. As described above, although some magnesium may be removed in the neutralization step and manganese/aluminum extraction step, the magnesium ions are not removed to such an extent that it can be effectively used for the production of lithium ion batteries, and the magnesium ions may be contained in the metal-containing solution. When the metal-containing solution thus contains certain amounts of magnesium ions, for example, many of the magnesium ions tend to remain in the metal-containing solution containing the cobalt ions and the nickel ions after the cobalt extraction step, so that it is particularly effective to carry out the magnesium separation step as in this embodiment. Further, since many of the magnesium ions tend to remain in the extracted solution after the cobalt extraction step, it is also effective to separate nickel and magnesium in the nickel extraction step. It should be noted that if the magnesium ion concentration of the metal-containing solution is low, for example less than 0.002 g/L, this may not be problematic so much. The magnesium ion concentration of the metal-containing solution may be 1.000 g/L or less.

Further, the metal-containing solution has a cobalt ion concentration of, for example, 0 g/L to 50 g/L, typically 1 g/L to 15 g/L, and a nickel ion concentration of, for example, 0 g/L to 50 g/L, typically 1 g/L to 15 g/L. In addition, the metal-containing solution may also contain sodium ions as impurities. In this case, the sodium concentration in the metal-containing solution is, for example, from 5 g/L to 40 g/L, typically from 10 g/L to 30 g/L.

### (Cobalt Extraction Step)

The metal-containing solution after the above manganese/aluminum extraction step contains one or both of cobalt ions and nickel ions, as well as magnesium ions. In the cobalt extraction step, the cobalt ions in the metal-containing solution are mainly separated from the nickel ions and extracted into a solvent by carrying out a solvent extraction method on the metal-containing solution containing the cobalt ions and the nickel ions, and the cobalt ions extracted into the solvent are then stripped. As a result, a cobalt-containing solution that is substantially free of nickel is obtained as the stripped solution. It should be noted that the magnesium ions may also remain in the extracted solution of the cobalt extraction step. In addition, for the metal-containing solution that contains the cobalt ions and the magnesium ions but does not contain the nickel ions, the cobalt extraction step can be omitted and the magnesium separation step can be performed. Further, for the metal-containing solution that contains the nickel ions and the magnesium ions but does not contain the cobalt ions, the nickel extraction step may be performed without carrying out the cobalt extraction step.

In the cobalt extraction step, not only cobalt ions but also a part of magnesium ions will be extracted if it is carried out under conditions where the cobalt ions are extracted as much as possible and the extraction of the nickel ions is minimized. When the magnesium content in the battery powder is 100% by mass, the cobalt-containing solution may contain 5% to 30% by mass of magnesium. In addition, if the leached solution obtained in the leaching step as described above does not contain the cobalt ions or the nickel ions such that the metal-containing solution after the manganese/aluminum extraction step also does not contain the cobalt ions or the nickel ions, there is no need to separate the cobalt ions from the nickel ions, so that the cobalt extraction step can be omitted.

In the cobalt extraction step, the cobalt ions and the magnesium ions are extracted using a solvent containing a phosphonate ester-based extracting agent. A preferable example of the above phosphonate ester-based extractant includes 2-ethylhexyl 2-ethylhexylphosphonate (product name: PC-88A, Ionquest 801), from the viewpoint of separation efficiencies of the nickel ions and the cobalt ions.

In the cobalt extraction step, the equilibrium pH during extraction is preferably 4.5 to 5.5, more preferably 4.8 to 5.2. When performing multiple stages of extraction, the equilibrium pH during at least one stage of extraction, for example the equilibrium pH during the first stage of extraction, can be set to a value within this range. The number of extraction stages and O/A ratio can be set as appropriate.

As an example of the cobalt extraction step, the extraction can be performed on the metal-containing solution using a solvent containing PC-88A. The solvent may contain 25% by volume of PC-88A and 75% by volume of Shellsol D70 ("Shellsol" is a registered trademark of Shell Chemicals). When performing multiple stages of extraction, the number of stages can be set as appropriate. For example, the equilibrium pH during extraction may be lowered for every additional stages. The O/A ratio can be set as needed, and NaOH can be used as a pH adjusting agent. When the magnesium ion concentration of the metal-containing solution is 0.002 g/L, the magnesium ion concentration of the stripped solution obtained in the cobalt extraction step may be 0.002 g/L, and the magnesium ion concentration of the extracted solution may be 0.001 g/L. When the magnesium ion concentration of the metal-containing solution is 1.000 g/L, the magnesium ion concentration of the stripped solution obtained in the cobalt extraction step may be 0.550 g/L, and the magnesium ion concentration of the extracted solution may be 0.610 g/L.

The solvent containing the cobalt ions and the magnesium ions after extraction may be scrubbed one or more times, if necessary. The scrubbing solution can be, for example, an acidic solution of sulfuric acid, and the equilibrium pH can be from 3.5 to 5.5.

The cobalt ions are stripped from the solvent that has extracted the cobalt ions and the magnesium ions. In this case, the magnesium ions are also extracted. A cobalt-containing solution containing the cobalt ions and the magnesium ions as impurities is obtained as a stripped solution. The stripping solution used for the stripping may be any of inorganic acids such as sulfuric acid, hydrochloric acid, or nitric acid. Here, it is carried out under a pH condition such that all the cobalt ions are transferred from the organic phase (i.e., the solvent) to the aqueous phase (i.e., the stripping solution) as much as possible. Specifically, the pH is preferably in the range of 2.0 to 4.0, more preferably in the range of 2.5 to 3.5. It should be noted that the O/A ratio and the number of stages can be determined as appropriate. The liquid temperature may be room temperature, but it is preferably 0°C to 40°C.

### (Magnesium Separation Step)

The stripped solution obtained by the stripping in the cobalt extraction step contains the cobalt ions, and the magnesium ions as impurities. The magnesium ions become impurities especially when a cobalt salt is produced by performing a crystallization step as described below, leading to a decrease in its purity. In an embodiment of the method for producing the cobalt solution, magnesium is separated by using the stripped solution as the cobalt-containing solution and extracting the cobalt ions into the organic phase and leaving the magnesium ions in the aqueous phase by the solvent extraction method. Subsequently, the organic phase is stripped to obtain a cobalt solution as the stripped solution.

It should be noted that the magnesium separation step can be applied to any solution as long as it contains the cobalt ions, and the magnesium ions as impurities. For example, if a leached solution is obtained by leaching the metals in the battery powder that does not contain nickel but contains cobalt, the extracted solution after the manganese/aluminum extraction step does not contain the nickel ions, so that the magnesium separation step can be carried out without the cobalt extraction step. The magnesium ion concentration of the cobalt-containing solution before the magnesium separation step is preferably 0.002 g/L to 1.000 g/L, typically 0.002 g/L to 0.550 g/L. This is because the magnesium ion concentration of the cobalt-containing solution of less than 0.002 g/L allows a high purity cobalt solution suitable for, for example, lithium ion batteries, to be obtained without removing magnesium ions in the magnesium separation step even if the magnesium ions are contained in the cobalt-containing solution obtained by extraction and stripping in the cobalt extraction step. On one hand, when the magnesium ion concentration is higher, for example, more than 1.000 g/L, the cobalt ions may be significantly lost if the magnesium ions are removed in the magnesium separation step to such an extent that it can be effectively used for the production of lithium ion batteries. On the other hand, when one tries not to increase the loss of the cobalt ions in the magnesium separation step, it may not be possible to remove the magnesium ions to such an extent that it can be effectively used for the production of lithium ion batteries.

In the magnesium separation step, a solvent containing a carboxylic acid-based extracting agent such as neodecanoic acid and naphthenic acid is used. In particular, to extract the cobalt ions without extracting the magnesium ions as much as possible, the carboxylic acid-based extracting agent such as neodecanoic acid, specifically Versatic Acid 10 (also referred to as VA-10) manufactured by Shell Chemicals is preferred.

The above carboxylic acid-based extracting agent is typically diluted with a hydrocarbon-based organic solvent and used as a solvent. Examples of the organic solvent include aromatic solvents, paraffinic solvents, naphthenic solvents, and the like. Here, the concentration of the carboxylic acid-based extracting agent in the solvent is preferably 20% by volume to 30% by volume. If the concentration of the carboxylic acid extractant is lower than 20% by volume, a large amount of organic phase may be required for increasing an extraction efficiency. On the other hand, if the concentration of the carboxylic acid-based extracting is higher than 30% by volume, there is a concern that the viscosity of the organic phase will increase and the phase separation properties will deteriorate, making it difficult to separate the aqueous phase from the organic phase. In solvent extraction in steps other than the magnesium separation step, the extracting agent can also be diluted in substantially the same manner and used as a solvent.

The concentration of the carboxylic acid-based extracting agent in the solvent used for extraction in the magnesium separation step is preferably 25% by volume or more. If the concentration of the carboxylic acid-based extracting agent in the solvent is lower than 25% by volume, precipitates containing cobalt compounds may be generated in the aqueous phase during the extraction of the cobalt ions, which may cause clogging of piping to lead to operational suspension. As will be described below, when multiple stages of extraction are performed, it is preferable to maintain the concentration of the carboxylic acid-based extracting agent in the solvent at 25% by volume or more during any stage of extraction. The preferred range of the concentration of carboxylic acid-based extracting agent in the solvent is 25% to 30% by volume.

Further, the equilibrium pH when extracting the cobalt ions is preferably 6.0 to 7.0 so that an extraction rate of the magnesium ions is less than 20% and an extraction rate of the cobalt ions is close to 60%. When the equilibrium pH during extraction is higher, many cobalt ions are extracted, but the magnesium ions are also easily extracted. By lowering the equilibrium pH during extraction to a certain extent, substantially no magnesium ions will be extracted. In addition, if the extraction rate of the cobalt ions is to be maintained at a high level, the equilibrium pH is preferably 6.5 to 7.0 so that the extraction rate of the magnesium ions is less than 20% and the extraction rate of the cobalt ions is even higher, i.e., 80% or more. Further, if the extraction rate of the magnesium ions is to be suppressed, the equilibrium pH is more preferably 6.0 to 6.5 so that substantially no magnesium ions will be extracted. The extraction can be performed in only one stage or in multiple stages (for example, three stages). When performing multiple stages of extraction, the equilibrium pH during at least one stage of extraction, preferably during the first stage of extraction, can be within the above range. Although the equilibrium pH during extraction in other stages is not particularly limited, conditions are often set such that the equilibrium pH gradually decreases as the number of stages increases. In particular, when the equilibrium pH during at least the final stage of extraction is 6.5 or less, magnesium can be more effectively removed. However, even if the equilibrium pH during extraction is relatively high, for example 7.5, it is possible to remove the magnesium ions to an acceptable level by performing the scrubbing as described below. It should be noted that the O/A ratio can be set as needed.

If the pH during the extraction of the cobalt ions is high to some extent, the solubility of the carboxylic acid-based extracting agent in water increases, so that the carboxylic acid-based extracting agent in the solvent will be dissolved in the aqueous phase, resulting in loss of the carboxylic acid-based extracting agent. Furthermore, in this case, the concentration of the carboxylic acid-based extracting agent in the solvent decreases, and as described above, there is a risk that precipitates may be generated. To address this, it is desirable to recover the carboxylic acid-based extracting agent from the extracted solution, as described below.

To manage the concentration of the carboxylic acid-based extracting agent in the solvent, for example, the relationship (calibration curve) between the concentration of the carboxylic acid-based extracting in the solvent and the amounts of cobalt ions extracted into the solvent is obtained in advance. Then, a sample of the solvent is taken from the magnesium separation step, and the sample is used to conduct a test for extracting cobalt ions from a solution containing the cobalt ions. The concentration of the carboxylic acid-based extracting agent contained in the solvent can be estimated from the amounts of the cobalt ions extracted into the solvent in this test.

The extraction can be performed based on common techniques. As an example, a solution (i.e., an aqueous phase) and a solvent (i.e., an organic phase) are brought into contact with each other and stirred and mixed, typically by a mixer, for example, for 5 to 60 minutes, to cause the ions to react with the extracting agent. The temperature during the extraction is from ordinary temperature (approximately 15° C to 25°C) to 60°C or less, and it is preferably carried out at 35°C to 45°C for reasons of the extraction rate, phase separation properties, and evaporation of the organic solvent. Subsequently, a settler separates the mixed organic phase and aqueous phase based on the difference in specific gravity.

The solvent that has extracted the cobalt ions may be subjected to scrubbing, if necessary. The scrubbing effectively removes the magnesium ions that may be mixed into the solvent. Further, it is also possible to remove sodium ions that may be contained in the solvent due to, for example, a pH adjusting agent used in the solvent extraction, by scrubbing. The scrubbing may be omitted.

In order to promote the removal of the magnesium ions and the like, the equilibrium pH during scrubbing is 5.5 to 6.5. If the equilibrium pH during scrubbing is more than 6.5, there is a concern that the magnesium ions and the like will not be sufficiently removed. Further, if it is desired to further suppress the loss of cobalt, the equilibrium pH during scrubbing is preferably 6.0 to 6.5. When the equilibrium pH during scrubbing is 5.5, approximately 50% of cobalt ions will be lost before and after scrubbing, but if the equilibrium pH is 6.0 or more, the loss of cobalt ions can be suppressed to such an extent that substantially no loss of cobalt ions will be observed. However, even if the loss of cobalt ions is significant, the scrubbed solution can be mixed with the leached solution and circulated without being discarded. Furthermore, if it is desired to remove the sodium ions in addition to the magnesium ions, the equilibrium pH during scrubbing is preferably 5.5 to 6.0. When the equilibrium pH during scrubbing is 6.0 or less, most of the sodium ions can be removed.

The scrubbing solution used for scrubbing may contain cobalt ions. In order to effectively remove impurities such as magnesium ions and sodium ions that may be contained in the solvent by scrubbing, it is preferable that the cobalt ion concentration of the scrubbing solution is equal to or higher than the total concentration of impurities in the solvent. The impurities in the solvent mean ions other than the cobalt ions, such as magnesium ions and sodium ions. The scrubbing can be performed in one or more stages, and the equilibrium pH in at least one stage can be in such a range. The scrubbing solution may be a sulfuric acid solution or the like.

Subsequently, stripping is performed using a stripping solution containing sulfuric acid, hydrochloric acid, nitric acid, or the like on the solvent that has removed the cobalt ions. When producing cobalt sulfate in a crystallization step as described below, it is preferable to use a stripping solution of sulfuric acid. The pH during the stripping is preferably 1.0 to 4.0, more preferably 1.5 to 2.0. The O/A ratio and the number of stages are not particularly limited. The temperature during the stripping is from ordinary temperature (approximately 15°C to 25°C) to 60°C or less, and it is preferably carried out at 35°C to 45°C for reasons of the extraction rate, phase separation properties, and evaporation of the organic solvent. This provides a cobalt solution as a stripped solution.

Through the magnesium separation step, the magnesium ion concentration of the cobalt solution can be sufficiently reduced to, for example, 0.001 g/L to 0.002 g/L. That is, the magnesium ions can be removed to such an extent that it can be effectively used for the production of lithium ion batteries. Also, by performing the neutralization step, the manganese/aluminum extraction step, and the cobalt extraction step as preprocessing steps, the nickel ion concentration, the manganese ion concentration, the aluminum ion concentration, and the iron ion concentration in the cobalt solution can also be reduced to such an extent that it can effectively be used for the production of lithium ion batteries.

The extracted solution obtained after extracting the cobalt ions into the solvent may contain a carboxylic acid-based extracting agent dissolved from the solvent during extraction. If the extracted solution is discarded, the carboxylic acid-based extracting agent contained therein will be lost, so it is preferable to recover the carboxylic acid-based extracting agent from the extracted solution.

To recover the carboxylic acid-based extracting agent from the extracted solution, for example, the extracted solution can be brought into contact with a solvent, such as mixing, and the equilibrium pH can be adjusted to 5.5 or less to transfer the carboxylic acid-based extracting agent in the extracted solution to the solvent, and the solvent can be separated from the aqueous phase by gravity separation or the like. Thus, the carboxylic acid-based extracting agent can be recovered into the solvent from the extracted solution. As the above equilibrium pH is lower, the amount of carboxylic acid-based extracting agent recovered increases, but if it is too low, the amount recovered does not change so much, leading to an increase in cost due to an increase in an amount of an acid such as sulfuric acid added. Also, the cobalt ions may remain in the carboxylic acid-based extracting agent during recovery, and if the equilibrium pH is too low, the cobalt ions transfer to the aqueous phase to cause the loss. From this viewpoint, the equilibrium pH is even more preferably 1.0 or more and 5.0 or less. The solvent to be brought into contact with the extracted solution is not particularly limited, but it may be a solvent used after stripping (and in some cases after scavenging). Thus, the solvent obtained by recovering the carboxylic acid-based extracting agent from the extracted solution can be used for extracting the cobalt ions in the magnesium separation step.

Alternatively, as described above, the equilibrium pH can be adjusted to 5.5 or less using the extracted solution alone without bringing the extracted solution into contact with the solvent as described above. Then, when specific gravity separation or the like is performed, for example, the carboxylic acid-based extracting agent is separated from the extracted solution. The carboxylic acid-based extracting agent can thus be recovered from the extracted solution. In this case as well, the equilibrium pH as described above is more preferably 1.0 or more and 5.0 or less. The carboxylic acid-based extracting agent separated from the extracted solution can be used to extract the cobalt ions in the magnesium separation step. It should be noted that in many cases, the solvent after the stripping (and further scavenging in some cases) is used again to extract the cobalt ions and is circulated in the magnesium separation step. The carboxylic acid-based extracting agent separated from the extracted solution can be used in the extraction of the cobalt ions with such a circulating solvent. In order to adjust the amount of the circulating solvent sent to the extraction of the cobalt ions depending on the amount of the carboxylic acid-based extracting agent recovered from the extracted solution, a tank for storing the circulating solvent may be provided in the middle of the route for sending the circulating solvent from the stripping (or subsequent scavenging) to the extraction as needed.

### (Nickel Extraction Step)

When the cobalt ions and the magnesium ions are separated from the metal-containing solution in the cobalt extraction step, the extracted solution obtained in the cobalt extraction step can be subjected to a nickel extraction step. It should be noted that the extracted solution after the cobalt extraction step may contain small amounts of magnesium ions in addition to the nickel ions. The magnesium ion concentration of the extracted solution may be from 0.001 g/L to 0.610 g/L. When the magnesium content in the battery powder is 100% by mass, the extracted solution may contain 5% to 40% by mass of magnesium. In this embodiment, the nickel extraction step is not limited to the case where it is applied to the extracted solution obtained in the cobalt extraction step, but it can be applied to any solution as long as it contains the nickel ions, and the magnesium ions as impurities. For example, when the battery powder containing nickel but not cobalt is leached to obtain a leached solution, the nickel extraction step can be directly applied to the extracted solution after the manganese/aluminum extraction step.

In the nickel extraction step, the nickel ions are extracted from the above extracted solution using a carboxylic acid-based extracting agent, and the extracted nickel ions are stripped from the solvent. A nickel solution is obtained as a stripped solution. Examples of the carboxylic acid-based extracting agent include neodecanoic acid and naphthenic acid, and among them, neodecanoic acid (particularly VA-10) is preferred because of its excellent ability to extract the nickel ions.

When extracting the nickel ions, the equilibrium pH is preferably 6.3 to 7.5 so that the extraction rate of magnesium ions is close to 20% and the extraction rate of nickel ions is more than 50%. Further, the equilibrium pH is more preferably 6.4 to 6.9 so that the extraction rate of magnesium ions is lowered up to approximately 5% and the extraction rate of nickel ions is 80% or more. Further, the equilibrium pH is more preferably 6.4 to 6.6 so that substantially no magnesium ions are extracted while increasing the extraction rate of cobalt ions to some extent. When performing multiple stages (three stages, etc.) of extraction, the equilibrium pH during at least one stage of extraction, for example the equilibrium pH during the first stage of extraction, can be in the above range. In the multiple stages of extraction, the equilibrium pH can be gradually lowered as the subsequent stages progress.

The solvent that has extracted the nickel ions may be scrubbed using a scrubbing solution such as a sulfuric acid solution, if necessary. The equilibrium pH during scrubbing is preferably 5.5 to 6.5. If the equilibrium pH during scrubbing is more than 6.5, the magnesium ions, which may be extracted into the solvent together with the nickel ions, may be insufficiently removed. Furthermore, the equilibrium pH during scrubbing is preferably 5.5 to 6.0. When the equilibrium pH during scrubbing is 6.0 or less, substantially all sodium ions can be removed in addition to the magnesium ions.

The solution that has extracted the nickel ions is then stripped using a stripping solution containing sulfuric acid, hydrochloric acid, nitric acid, or the like. The pH is preferably 1.0 to 3.0, more preferably 1.5 to 2.5. It should be noted that the O/A ratio and the number of stages can be determined as appropriate, but the O/A ratio is preferably 5 to 1, more preferably 4 to 2. As a result, a nickel solution is obtained as a stripped solution.

Through the nickel extraction step, the magnesium ion concentration of the nickel solution can be sufficiently reduced to, for example, 0.001 g/L to 0.002 g/L. That is, the magnesium ions can be removed to such an extent that it can be effectively used for the production of lithium ion batteries. In addition, by performing the neutralization step, the manganese/aluminum extraction step, and the cobalt extraction step as preprocessing steps, the cobalt ion concentration, the manganese ion concentration, the aluminum ion concentration, and the iron ion concentration in the nickel solution may be reduced to such an extent that they can be effectively used for the production of lithium ion batteries.

### (Crystallization Step)

The cobalt solution obtained in the magnesium separation step after the cobalt extraction step (e.g., a cobalt sulfate solution, a cobalt hydrochloride solution, a cobalt nitrate solution) and the nickel solution obtained in the nickel extraction step (e.g., a nickel sulfate solution, a nickel hydrochloride solution, a nickel nitrate solution) can be subjected to a crystallization step of crystallizing cobalt ions or nickel ions, respectively. Thus, in the crystallization step using the cobalt solution, a cobalt salt (e.g., cobalt sulfate, cobalt hydrochloride, cobalt nitrate) can be produced as shown in FIG. 2. Further, in the crystallization step using the nickel solution, a nickel salt (e.g., nickel sulfate, nickel hydrochloride, nickel nitrate) can be produced. It should be noted that, if necessary, a step such as solvent extraction may be performed before the crystallization step to remove impurities prior to crystallization.

In the crystallization step, the cobalt solution or nickel solution is concentrated by heating to, for example, 40°C to 120°C. As a result, the cobalt ions are crystallized as cobalt salts, and nickel ions are crystallized as nickel salts.

The cobalt salts and the nickel salts thus produced can be effectively used as raw materials for producing lithium ion batteries because impurities such as magnesium have been sufficiently removed.

### (Magnesium Removal Step)

If the acidic solution obtained in the manganese/aluminum extraction step contains relatively large amounts of magnesium ions, the acidic solution may be subjected to a magnesium removal step. In particular, when the magnesium concentration of the acidic solution obtained in the manganese/aluminum extraction step is more than 1.000 g/L, it is desirable to perform the magnesium removal step. In the magnesium removal step, the cobalt ions and the nickel ions in the acidic solution obtained in the manganese/aluminum extraction step are extracted by a solvent extraction method, while a part of magnesium ions are removed by leaving them in the solution. This can lead to suppression of the transferring of large amounts of magnesium ions to the subsequent cobalt extraction step, and specifically, it can lead to reduction of the magnesium concentration to 1.000 g/L or less. If the magnesium concentration is 1.000 g/L or less, the cobalt solutions obtained in the cobalt extraction step (including stripping) and the magnesium separation step can be used for the production of lithium ion batteries. At this time, if the acidic solution contains sodium ions, they are also removed by leaving them in the solution. However, the magnesium removal step is optional and may be omitted.

If an attempt is made to completely remove the magnesium ions in the magnesium removal step, the cobalt ions and the nickel ions may not be sufficiently extracted, resulting in the loss of them. Therefore, the magnesium removal step is performed under conditions such that a part of the magnesium ions are removed by leaving them in the solution.

Specifically, the cobalt ions and/or the nickel ions are extracted using a solvent containing a carboxylic acid-based extracting agent at an equilibrium pH during extraction of 6.8 to 7.2, preferably 6.9 to 7.0, and at an O/A ratio of 1.0 to 1.5, preferably 1.0 to 1.2. As a result, while maintaining good phase separation properties, most of the cobalt ions and/or the nickel ions can be extracted into the solvent (i.e., the organic phase), whereas a part of magnesium ions can be left in the extracted solution (i.e., the aqueous phase) without being extracted. The O/A ratio means a volume ratio of the organic phase to the aqueous phase.

Examples of the carboxylic acid-based extracting agent used for extraction in the magnesium removal step include, but not limited to, neodecanoic acid and naphthenic acid. Among these, neodecanoic acid is preferred from the viewpoint of extracting the cobalt ions and the nickel ions without extracting the magnesium ions as much as possible. Further, the carboxylic acid-based extracting agent preferably contains a carboxylic acid having 8 to 16 carbon atoms. Specifically, VA-10 or the like can be used.

In the stripping after extraction, the solvent that has extracted the cobalt ions and/or the nickel ions as described above is mixed with a stripping solution such as sulfuric acid or hydrochloric acid, and stirred for 5 to 60 minutes using a mixer or the like. The acid concentration of the stripping solution is preferably adjusted to 0.05 g/L to 200 g/L (pH: -0.6 to 3.0) in order to effectively strip the manganese ions, the cobalt ions, and the nickel ions in the solvent, and it is more preferably adjusted to 1.5 g/L to 15 g/L (pH: 0.5 to 1.5). The stripping can be carried out at a temperature of ordinary temperature to 60°C, preferably 35°C to 45°C.

### EXAMPLES

The methods for producing the cobalt solution, the cobalt salt, the nickel solution and the nickel salt as described above were experimentally conducted and their effects were confirmed as described below. However, the description herein is merely for the purpose of illustration and is not intended to be limited thereto.

### (Method for Producing Cobalt Solution)

Battery powder from lithium ion battery waste was subjected to a leaching step, a neutralization step, a manganese/aluminum extraction step, and a cobalt extraction step to obtain a cobalt-containing solution as a stripped solution of the cobalt extraction step. The cobalt ion concentration of the cobalt-containing solution was 15 g/L, and the magnesium ion concentration was 1.000 g/L.

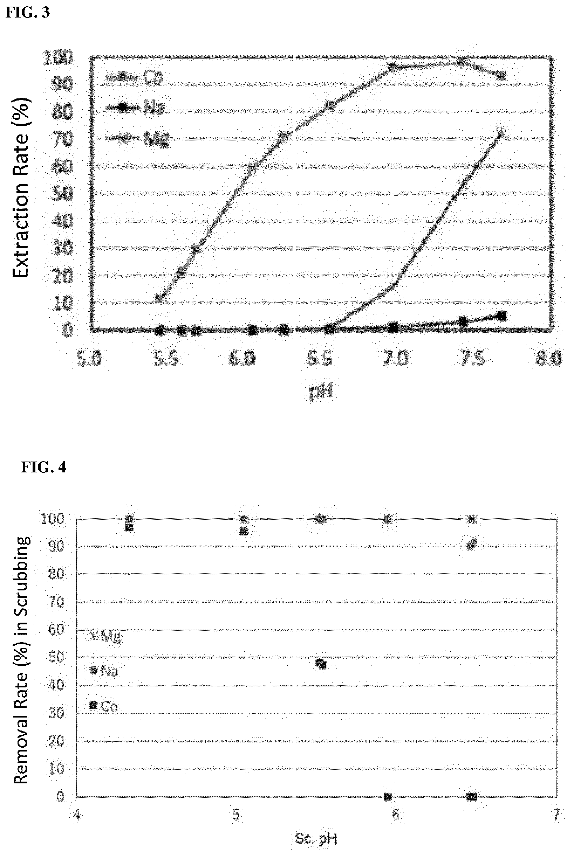

The above cobalt-containing solution was subjected to a magnesium separation step. The solvent used herein was a solvent prepared by diluting VA-10, a carboxylic acid-based extracting agent, with Shellzol D70 ("Shellzol" is a registered trademark of Shell Chemicals), and containing 25% by volume of VA-10 and 75% by volume of Shellrzol D70. The O/A ratio during extraction was 2/1, and 25% by volume NaOH was used as the pH adjusting agent. The extraction was performed while changing the equilibrium pH to obtain the results shown in FIG. 3. FIG. 3 is a graph showing the relationship between the extraction rate of each ion into the solvent and the equilibrium pH during extraction. Table 1 also shows the numerical value of each plot in FIG. 3. The extraction rate of each ion into the solvent is calculated from a percentage, to an amount calculated from each ion concentration and volume in the cobalt-containing solution prior to the solvent extraction, of an amount calculated from each ion concentration and volume of the stripped solution obtained by performing subsequent stripping on that solvent. The stripping was performed using sulfuric acid at a pH of 1.0, and at an O/A ratio of 1/1.

**[Table 1]**

| pH during Extraction | Extraction Rate (%) | | |
|---|---|---|---|
| | Co | Mg | Na |
| 5.45 | 11.5 | 0 | 0 |
| 5.59 | 21.2 | 0 | 0 |
| 5.69 | 29.4 | 0 | 0 |
| 6.05 | 58.8 | 0 | 0.1 |
| 6.26 | 70.9 | 0 | 0.2 |
| 6.56 | 82.1 | 0.9 | 0.4 |
| 6.97 | 96.2 | 16.1 | 1.1 |
| 7.42 | 98.1 | 53.4 | 3.0 |
| 7.68 | 93.1 | 72.3 | 5.5 |

It is found from FIG. 3 that the cobalt ions and the magnesium ions can be effectively separated by using the solvent containing the carboxylic acid-based extracting agent. In particular, when the equilibrium pH is 6.0 to 7.0, most of the cobalt ions can be extracted while sufficiently suppressing the extraction of the magnesium ions. It should be noted that no precipitate was observed in the aqueous phase during extraction of the cobalt ions. This would be because the concentration of VA-10 in the solvent was maintained at about 25% by volume during extraction.

Further, the solvent that removed the cobalt ions was then subjected to scrubbing, followed by stripping. As the scrubbing solution, a sulfuric acid solution having a cobalt ion concentration of 10 g/L was used. The solvent before scrubbing had a cobalt ion concentration of 7.6 g/L, a magnesium ion concentration of 0.1 g/L, and a sodium ion concentration of 0.1 g/L. Each ion concentration of the solvent is a value calculated from each ion concentration in the stripped solution after performing stripping on the solvent. The O/A ratio during scrubbing was 1/1. The stripping was carried out using 500 g/L of sulfuric acid, and at an O/A ratio of 1/1. The stripping provided a cobalt sulfate solution.

A test was conducted by changing the equilibrium pH at the time of scrubbing to obtain the graph shown in FIG. 4 as a removal rate of each ion in the stripped solution with respect to the pH during scrubbing. The removal rate is calculated from a percentage, to an amount calculated from each ion concentration and volume in the stripped solution obtained by stripping on the solvent before scrubbing, of an amount calculated from each ion concentration and volume in the stripped solution obtained by stripping on the solvent after scrubbing. It should be noted that the removal rate may be below 0% due to the cobalt ions in the scrubbing solution transferring to the solvent. In this case, the removal rate is determined to be 0%. Table 2 also shows the numerical value of each plot in FIG. 4. As can be seen from FIG. 4, the magnesium ions and the sodium ions were effectively removed by scrubbing. In particular, it is found that in the test where the scrubbing pH was 6.0 or less, both magnesium ions and sodium ions were below the detection limit. On the other hand, if the pH of scrubbing is too low, there is a concern that not only magnesium ions and sodium ions but also cobalt ions will be removed by scrubbing.

**[Table 2]**

| pH during Scrubbing | Removal Rate (%) | | |
|---|---|---|---|
| | Co | Mg | Na |
| 4.33 | 96.9 | 100 | 100 |
| 5.05 | 95.3 | 100 | 100 |
| 5.52 | 48 | 100 | 100 |
| 5.54 | 47.2 | 100 | 100 |
| 5.95 | 0 | 100 | 100 |
| 6.46 | 0 | 100 | 90.1 |
| 6.48 | 0 | 100 | 91.7 |

Furthermore, the cobalt sulfate shown in Table 3 was obtained by performing a crystallization step on the cobalt sulfate solution obtained by performing stripping after scrubbing. Thus, cobalt sulfate having a magnesium grade of 10 ppm by mass or less was obtained. Further, each of the nickel grade, the manganese grade, the aluminum grade, the iron grade, and the sodium grade of the cobalt sulfate was 10 ppm by mass or less. Thus, it was confirmed that impurities were removed to such an extent that it could be used effectively for the production of lithium ion batteries.

**[Table 3]**

| | Mg (mass ppm) | Ni (mass ppm) | Mn (mass ppm) | Al (mass ppm) | Fe (mass ppm) | Na (mass ppm) |
|---|---|---|---|---|---|---|
| Cobalt Sulfate | 1 | 1 | 2 | 1 | 1 | 9 |

As described above, it was found that according to the method for producing the cobalt solution described above, the magnesium ions could be effectively removed from the cobalt-containing solution containing the magnesium ions.

### (Method for Producing Nickel Solution)

Battery powder from lithium ion battery waste was subjected to a leaching step, a neutralization step, a manganese/aluminum extraction step, and a cobalt extraction step. The extracted solution in the cobalt extraction step has a nickel ion concentration of 7 g/L, a magnesium ion concentration of 0.6 g/L, and a sodium ion concentration of 40 g/L.

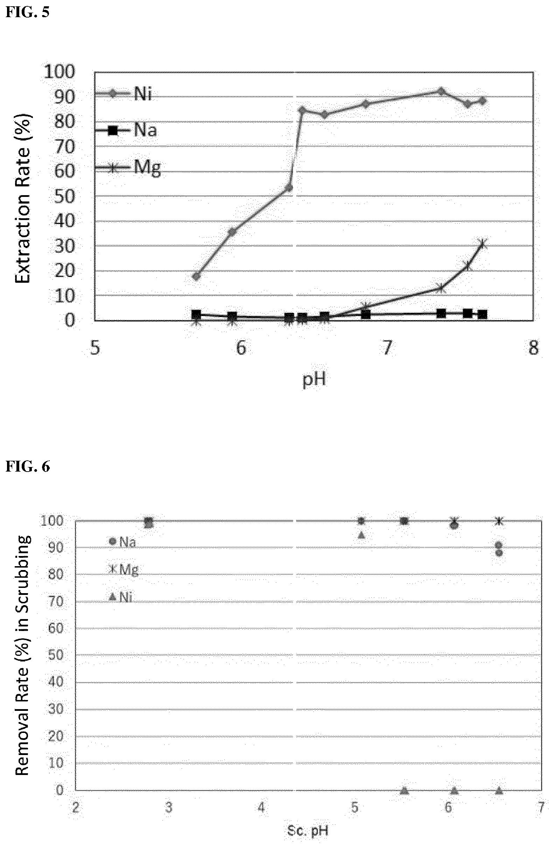

The extracted solution as described above was subjected to a nickel extraction step. The solvent used herein was a solvent prepared by diluting VA-10, a carboxylic acid-based extracting agent, with Shellzol D70 ("Shellzol" is a registered trademark of Shell Chemicals), and containing 25% by volume of VA-10 and 75% by volume of Shellrzol D70. The O/A ratio during extraction was 1/1, and 25% by volume NaOH was used as the pH adjusting agent. The extraction was performed while changing the equilibrium pH to obtain the results shown in FIG. 5. FIG. 5 is a graph showing the relationship between the extraction rate of each ion into the solvent with respect to the equilibrium pH during extraction. Table 4 also shows the numerical value of each plot in FIG. 5. The extraction rate of each ion into the solvent is calculated from a percentage, to an amount calculated from each ion concentration and volume in the extracted solution prior to the solvent extraction, of an amount calculated from each ion concentration and volume of the stripped solution obtained by performing subsequent stripping on that solvent. The stripping was performed using sulfuric acid at a pH of 1.0, and at an O/A ratio of 1/1.

**[Table 4]**

| pH during Extraction | Extraction Rate (%) | | |
|---|---|---|---|
| | Ni | Mg | Na |
| 5.69 | 17.8 | 0 | 2.5 |
| 5.94 | 35.6 | 0 | 1.5 |
| 6.33 | 53.5 | 0 | 1.3 |
| 6.42 | 84.6 | 0.2 | 1.2 |
| 6.57 | 83.0 | 1.0 | 1.5 |
| 6.85 | 87.1 | 5.3 | 2.4 |
| 7.37 | 92.1 | 13.0 | 2.8 |
| 7.55 | 87.3 | 22.0 | 2.9 |
| 7.65 | 88.3 | 31.1 | 2.4 |

It is found from FIG. 5 that by adjusting the equilibrium pH to 6.3 to 7.5 using the solvent containing the carboxylic acid-based extracting agent, the nickel ions can be effectively extracted while suppressing the extraction of the magnesium ions.

Further, the solvent that removed the nickel ions was then subjected to scrubbing, followed by stripping. As the scrubbing solution, a sulfuric acid solution having a nickel ion concentration of 10 g/L was used. The solvent before scrubbing had a nickel ion concentration of 7 g/L, a magnesium ion concentration of 0.5 g/L, and a sodium ion concentration of 1 g/L. Each ion concentration of the solvent is a value calculated from each ion concentration in the stripped solution after performing stripping on the solvent. The O/A ratio during scrubbing was 1/1. The stripping was carried out using 500 g/L of sulfuric acid, and at an O/A ratio of 1/1. The stripping provided a nickel sulfate solution.

A test was conducted by changing the equilibrium pH at the time of scrubbing to obtain the graph shown in FIG. 6 as a removal rate of each ion in the stripped solution with respect to the pH during scrubbing. The removal rate is calculated from a percentage, to an amount calculated from each ion concentration and volume in the stripped solution obtained by stripping on the solvent before scrubbing, of an amount calculated from each ion concentration and volume in the stripped solution obtained by stripping on the solvent after scrubbing. It should be noted that the removal rate may be below 0% due to the cobalt ions in the scrubbing solution transferring to the solvent. In this case, the removal rate is determined to be 0%. Table 5 also shows the numerical value of each plot in FIG. 6. As can be seen from FIG. 6, the magnesium ions and the sodium ions were effectively removed by scrubbing. In particular, it is found that in the test where the scrubbing pH was 5.5 or more, substantially no nickel ions were removed.

**[Table 5]**

| pH during Scrubbing | Removal Rate (%) | | |
|---|---|---|---|
| | Ni | Mg | Na |
| 2.77 | 98.7 | 100 | 100 |
| 2.8 | 99.1 | 100 | 100 |
| 5.07 | 94.8 | 100 | 100 |
| 5.52 | 0 | 100 | 100 |
| 5.54 | 0 | 100 | 100 |
| 6.06 | 0 | 100 | 100 |
| 6.07 | 0 | 100 | 98.3 |
| 6.54 | 0 | 100 | 90.8 |
| 6.55 | 0 | 100 | 88 |

Furthermore, the nickel sulfate shown in Table 6 was obtained by performing a crystallization step on the nickel sulfate solution obtained by performing stripping after scrubbing. Thus, nickel sulfate having a magnesium grade of 10 ppm by mass or less was obtained. Further, each of the cobalt grade, the manganese grade, the aluminum grade, the iron grade, and the sodium grade of the nickel sulfate was 10 ppm by mass or less. Thus, it was confirmed that impurities were removed to such an extent that it could be used effectively for the production of lithium ion batteries.

**[Table 6]**

| | Mg (mass ppm) | Co (mass ppm) | Mn (mass ppm) | Al (mass ppm) | Fe (mass ppm) | Na (mass ppm) |
|---|---|---|---|---|---|---|
| Nickel Sulfate | 1 | 7 | 1 | 1 | 1 | 9 |

As described above, it was found that according to the method for producing the nickel solution described above, the magnesium ions could be effectively removed from the nickel-containing solution containing the magnesium ions.

## Claims

1. A method for producing a cobalt solution by removing magnesium ions from a cobalt-containing solution obtained by subjecting battery powder resulting from lithium ion battery waste to at least a leaching process, the cobalt-containing solution comprising the magnesium ions,
wherein the method comprises: a magnesium separation step of extracting cobalt ions from the cobalt-containing solution using a solvent comprising a carboxylic acid-based extracting agent to separate the magnesium ions, and then stripping the cobalt ions from the solvent to obtain the cobalt solution as a stripped solution,
wherein in the magnesium separation step, the solvent after extracting the cobalt ions is scrubbed at an equilibrium pH of 5.5 to 6.5 before the stripping,
wherein a scrubbing solution used for the scrubbing contains cobalt ions, and the scrubbing solution has a cobalt ion concentration equal to or higher than the total concentration of ionic impurities, including magnesium ions and sodium ions, in the solvent.

2. The method for producing a cobalt solution according to claim 1, wherein in the magnesium separation step, an equilibrium pH is 6.0 to 7.0 when extracting the cobalt ions.

3. The method for producing a cobalt solution according to claim 1 or 2, wherein in the magnesium separation step, the solvent after extracting the cobalt ions is scrubbed at an equilibrium pH of 6.0 to 6.5 before the stripping.

4. The method for producing a cobalt solution according to claim 1 or 2, wherein the cobalt-containing solution has a magnesium ion concentration of 0.002 g/L to 1.000 g/L.

5. The method for producing a cobalt solution according to claim 1 or 2, wherein in the magnesium separation step, the cobalt ions are stripped from the solvent using a stripping solution containing sulfuric acid, hydrochloric acid or nitric acid, and a pH during the stripping is 1.0 to 4.0.

6. The method for producing a cobalt solution according to claim 1 or 2, wherein a concentration of the carboxylic acid-based extracting agent in the solvent used for extracting the cobalt ions in the magnesium separation step is 25% by volume to 30% by volume.

7. The method for producing a cobalt solution according to claim 1 or 2, wherein in the magnesium separation step, an extracted solution obtained after the extraction of the cobalt ions comprises a carboxylic acid-based extracting agent, and the carboxylic acid-based extracting agent is recovered from the extracted solution at an equilibrium pH of 5.5 or less, and the carboxylic acid-based extracting agent recovered from the extracted solution is used for extracting the cobalt ions.

8. The method for producing a cobalt solution according to claim 1 or 2, wherein the method comprises a cobalt extraction step of extracting the cobalt ions and part of the magnesium ions from a metal-containing solution comprising cobalt ions, nickel ions, and magnesium ions using a solvent comprising a phosphonate ester-based extracting agent, and stripping at least the cobalt ions from the solvent to obtain the cobalt-containing solution.

9. The method for producing a cobalt solution according to claim 8, wherein the metal-containing solution has a magnesium ion concentration of 0.002 g/L to 1.000 g/L.

10. The method for producing a cobalt solution according to claim 8, wherein the method comprises a magnesium removal step of removing part of magnesium ions by subjecting an acidic solution comprising cobalt ions, nickel ions, and magnesium ions to extraction and stripping using a solvent comprising a carboxylic acid-based extracting agent to obtain the metal-containing solution.

11. A method for producing a cobalt salt using the method for producing a cobalt solution according to claim 1 or 2,
wherein the method comprises a crystallization step of crystallizing the cobalt salt by crystallization from the cobalt solution obtained in the magnesium separation step.

## Patentansprüche

1. Verfahren zum Herstellen einer Kobaltlösung durch Entfernen von Magnesiumionen aus einer kobalthaltigen Lösung, die durch Aussetzen von Batteriepulver, das aus Lithium-Ionen-Batterie-Abfall resultiert, gegenüber mindestens einem Auslaugungsprozess erhalten wird, die kobalthaltige Lösung umfassend die Magnesiumionen, wobei das Verfahren umfasst: einen Magnesiumtrennungsschritt eines Extrahierens von Kobaltionen aus der kobalthaltigen Lösung unter Verwendung eines Lösungsmittels, umfassend ein Extraktionsmittel auf Karbonsäurebasis, um die Magnesiumionen zu trennen, und dann Strippen der Kobaltionen aus dem Lösungsmittel, um die Kobaltlösung als eine gestrippte Lösung zu erhalten,
wobei, in dem Magnesiumtrennungsschritt, das Lösungsmittel nach dem Extrahieren der Kobaltionen bei einem Gleichgewichts-pH-Wert von 5,5 bis 6,5 vor dem Strippen gewaschen wird,
wobei eine Waschlösung, die für das Waschen verwendet wird, Kobaltionen enthält und die Waschlösung eine Kobaltionenkonzentration aufweist, die gleich oder höher als die Gesamtkonzentration ionischer Verunreinigungen, einschließlich Magnesiumionen und Natriumionen, in dem Lösungsmittel ist.

2. Verfahren zum Herstellen einer Kobaltlösung nach Anspruch 1, wobei, in dem Magnesiumtrennungsschritt, ein Gleichgewichts-pH-Wert 6,0 bis 7,0 beträgt, wenn die Kobaltionen extrahiert werden.

3. Verfahren zum Herstellen einer Kobaltlösung nach Anspruch 1 oder 2, wobei, in dem Magnesiumtrennungsschritt, das Lösungsmittel nach dem Extrahieren der Kobaltionen bei einem Gleichgewichts-pH-Wert von 6,0 bis 6,5 vor dem Strippen gewaschen wird.

4. Verfahren zum Herstellen einer Kobaltlösung nach Anspruch 1 oder 2, wobei die kobalthaltige Lösung eine Magnesiumionenkonzentration von 0,002 g/l bis 1,000 g/l aufweist.

5. Verfahren zum Herstellen einer Kobaltlösung nach Anspruch 1 oder 2, wobei, in dem Magnesiumtrennungsschritt, die Kobaltionen aus dem Lösungsmittel unter Verwendung einer Stripplösung, die Schwefelsäure, Salzsäure oder Salpetersäure enthält, gestrippt werden und ein pH-Wert während des Strippens 1,0 bis 4,0 beträgt.

6. Verfahren zum Herstellen einer Kobaltlösung nach Anspruch 1 oder 2, wobei eine Konzentration des Extraktionsmittels auf Karbonsäurebasis in dem Lösungsmittel, das zum Extrahieren der Kobaltionen in dem Magnesiumtrennungsschritt verwendet wird, 25 Vol.-% bis 30 Vol.-% beträgt.

7. Verfahren zum Herstellen einer Kobaltlösung nach Anspruch 1 oder 2, wobei, in dem Magnesiumtrennungsschritt, eine extrahierte Lösung, die nach der Extraktion der Kobaltionen erhalten wird, ein Extraktionsmittel auf Karbonsäurebasis umfasst und das Extraktionsmittel auf Karbonsäurebasis bei einem Gleichgewichts-pH-Wert von 5,5 oder weniger aus der extrahierten Lösung zurückgewonnen wird und das Extraktionsmittel auf Karbonsäurebasis, das aus der extrahierten Lösung zurückgewonnen wird, zum Extrahieren der Kobaltionen verwendet wird.

8. Verfahren zum Herstellen einer Kobaltlösung nach Anspruch 1 oder 2, wobei das Verfahren einen Kobaltextraktionsschritt des Extrahierens der Kobaltionen und eines Teils der Magnesiumionen aus einer metallhaltigen Lösung, umfassend Kobaltionen, Nickelionen und Magnesiumionen, unter Verwendung eines Lösungsmittels, umfassend ein Extraktionsmittel auf Phosphonatesterbasis, und des Strippens mindestens der Kobaltionen aus dem Lösungsmittel umfasst, um die kobalthaltige Lösung zu erhalten.

9. Verfahren zum Herstellen einer Kobaltlösung nach Anspruch 8, wobei die metallhaltige Lösung eine Magnesiumionenkonzentration von 0,002 g/l bis 1,000 g/l aufweist.

10. Verfahren zum Herstellen einer Kobaltlösung nach Anspruch 8, wobei das Verfahren einen Magnesiumentfernungsschritt des Entfernens des Teils von Magnesiumionen durch Aussetzen einer sauren Lösung, umfassend Kobaltionen, Nickelionen und Magnesiumionen, gegenüber der Extraktion und des Strippens unter Verwendung eines Lösungsmittels, umfassend ein Extraktionsmittel auf Karbonsäurebasis, umfasst, um die metallhaltige Lösung zu erhalten.

11. Verfahren zum Herstellen eines Kobaltsalzes unter Verwendung des Verfahrens zum Herstellen einer Kobaltlösung nach Anspruch 1 oder 2,
wobei das Verfahren einen Kristallisationsschritt eines Kristallisierens des Kobaltsalzes durch Kristallisation aus der Kobaltlösung, die in dem Magnesiumtrennungsschritt erhalten wird, umfasst.

## Revendications

1. Procédé de production d'une solution de cobalt par élimination d'ions magnésium d'une solution contenant du cobalt obtenue en soumettant une poudre de batterie provenant de déchets de batteries lithium-ion à au moins un processus de lixiviation, la solution contenant du cobalt comprenant les ions magnésium,
dans lequel le procédé comprend : une étape de séparation du magnésium consistant à extraire les ions cobalt de la solution contenant du cobalt à l'aide d'un solvant comprenant un agent d'extraction à base d'acide carboxylique afin de séparer les ions magnésium, puis à séparer les ions cobalt du solvant afin d'obtenir la solution de cobalt sous forme de solution épurée,
dans lequel, lors de l'étape de séparation du magnésium, le solvant après extraction des ions cobalt est lavé à un pH d'équilibre de 5,5 à 6,5 avant l'épuration,
dans lequel une solution de lavage utilisée pour le lavage contient des ions cobalt, et la solution de lavage a une concentration en ions cobalt égale ou supérieure à la concentration totale d'impuretés ioniques, y compris des ions magnésium et des ions sodium, dans le solvant.

2. Procédé de production d'une solution de cobalt selon la revendication 1, dans lequel, lors de l'étape de séparation du magnésium, un pH d'équilibre est compris entre 6,0 et 7,0 lors de l'extraction des ions cobalt.

3. Procédé de production d'une solution de cobalt selon la revendication 1 ou 2, dans lequel, lors de l'étape de séparation du magnésium, le solvant après extraction des ions cobalt est lavé à un pH d'équilibre de 6,0 à 6,5 avant l'épuration.

4. Procédé de production d'une solution de cobalt selon la revendication 1 ou 2, dans lequel la solution contenant du cobalt a une concentration en ions magnésium de 0,002 g/L à 1,000 g/L.

5. Procédé de production d'une solution de cobalt selon la revendication 1 ou 2, dans lequel, lors de l'étape de séparation du magnésium, les ions cobalt sont extraits du solvant à l'aide d'une solution d'épuration contenant de l'acide sulfurique, de l'acide chlorhydrique ou de l'acide nitrique, et un pH pendant l'épuration est compris entre 1,0 et 4.0.

6. Procédé de production d'une solution de cobalt selon la revendication 1 ou 2, dans lequel une concentration de l'agent d'extraction à base d'acide carboxylique dans le solvant utilisé pour extraire les ions cobalt dans l'étape de séparation du magnésium est de 25 % en volume à 30 % en volume.

7. Procédé de production d'une solution de cobalt selon la revendication 1 ou 2, dans lequel, lors de l'étape de séparation du magnésium, une solution extraite obtenue après l'extraction des ions cobalt comprend un agent d'extraction à base d'acide carboxylique, et l'agent d'extraction à base d'acide carboxylique est récupéré à partir de la solution extraite à un pH d'équilibre inférieur ou égal à 5,5, et l'agent d'extraction à base d'acide carboxylique récupéré à partir de la solution extraite est utilisé pour extraire les ions cobalt.

8. Procédé de production d'une solution de cobalt selon la revendication 1 ou 2, dans lequel le procédé comprend une étape d'extraction du cobalt consistant à extraire les ions cobalt et une partie des ions magnésium d'une solution contenant des métaux comprenant des ions cobalt, des ions nickel et des ions magnésium à l'aide d'un solvant comprenant un agent d'extraction à base d'ester phosphonate, et l'épuration au moins des ions cobalt du solvant pour obtenir la solution contenant du cobalt.

9. Procédé de production d'une solution de cobalt selon la revendication 8, dans lequel la solution contenant des métaux a une concentration en ions magnésium de 0,002 g/L à 1,000 g/L.

10. Procédé de production d'une solution de cobalt selon la revendication 8, dans lequel le procédé comprend une étape d'élimination du magnésium consistant à éliminer une partie d'ions magnésium en soumettant une solution acide comprenant des ions cobalt, des ions nickel et des ions magnésium pour extraction et épuration à l'aide d'un solvant comprenant un agent d'extraction à base d'acide carboxylique pour obtenir la solution contenant des métaux.

11. Procédé de production d'un sel de cobalt à l'aide du procédé de production d'une solution de cobalt selon la revendication 1 ou 2,
dans lequel le procédé comprend une étape de cristallisation du sel de cobalt par cristallisation à partir de la solution de cobalt obtenue lors de l'étape de séparation du magnésium.
